**Europäisches Patentamt**

**European Patent Office**

**Office européen des brevets**

(19)

(11) Veröffentlichungsnummer: **0 329 638**

**A1**

## (12) EUROPÄISCHE PATENTANMELDUNG

(21) Anmeldenummer: 89890007.1

(22) Anmeldetag: 10.01.89

(51) Int. Cl.⁴: **C 22 B 21/00**
C 22 B 7/04

(30) Priorität: 17.02.88 AT 369/88

(43) Veröffentlichungstag der Anmeldung:
23.08.89 Patentblatt 89/34

(84) Benannte Vertragsstaaten:
CH DE FR GB IT LI

(71) Anmelder: **Austria Metall Aktiengesellschaft**
**A-5282 Braunau am Inn (AT)**

(72) Erfinder: **Haberfellner, Ernst**
**Wagnerbauerstrasse 19**
**A-5280 Braunau am Inn (AT)**

(54) **Aufbereitung und Entsorgung von Krätzen, Salzschlacken und aluminiumhaltigen Abfällen.**

(57) Verfahren zur Aufbereitung und Entsorgung von Krätzen, Salzschlacken und aluminiumhaltigen Abfällen, die nach einem Zerkleinerungsvorgang Korngrößen < 10 cm aufweisen, wobei die Krätzen, Salzschlacken und aluminiumhältigen Abfälle in einer drehbaren Lösetrommel (2) zur Auflösung und Abtrennung des metallischen Aluminiums mit Wasser behandelt und anschließend die unlöslichen Rückstände samt Salzlösung in einen Trennbehälter (3) mit Filter (4) befördert werden, während das abgetrennte, in der Lösetrommel (2) zurückbleibende metallische Aluminium nach Trocknung in den Schmelzofen (10) rückgeführt wird, daß die filtrierte Salzlösung in einen Vorverdampfer (5) mit nachgeschaltetem Eindicker (6) übergeführt wird, in welchem die Kristallisation erfolgt, die Salze über eine Zentrifuge (7) abgeschieden und nach dem Trocknen in einen Aluminiumumschmelzofen (8) eingesetzt werden und der Rückstand am Filter (4) des Trennbehälters (3) chloridfrei (< 5% Cl) gewaschen und deponiert bzw. bei höheren Aluminiumoxidgehalt zum Wiedereinsatz in der Elektrolysezelle aufbereitet wird.

EP 0 329 638 A1

**Beschreibung**

## Aufbereitung und Entsorgung von Krätzen, Salzschlacken und aluminiumhaltigen Abfällen

Die Erfindung betrifft ein Verfahren zur Aufbereitung und Entsorgung von Krätzen, Salzschlacken und aluminiumhaltigen Abfällen, die nach einem Zerkleinerungsvorgang Körngrößen < 10 cm aufweisen.

Ein ähnliches Verfahren zur Rückgewinnung von Aluminium aus Krätzen und anderen aluminiumhältigen Abfällen ist in unserer Patentschrift AT-PS 383 105 beschrieben.

Dieses Patentverfahren erzeugt aber Abwasser und zur Vermeidung von Schadstoffemissionen müssen Filteranlagen verwendet werden, deren Inhalt nicht von diesem Verfahren entsorgt wird. Weiters ist dieses Verfahren nur beschränkt für die Verarbeitung von Salzschlacken geeignet.

Erfindungsgemäß werden diese Nachteile (z.B. kein Abwasser) dadurch vermieden, daß die Krätzen, Salzschlacken und aluminiumhältigen Abfälle in einer drehbaren Lösetrommel zur Auflösung und Abtrennung des metallischen Aluminiums mit Wasser behandelt und anschließend die unlöslichen Rückstände samt Salzlösung in einen Trennbehälter mit Filter befördert werden, während das abgetrennte, in der Lösetrommel zurückbleibende metallische Aluminium nach Trocknung in den Schmelzofen rückgeführt wird, daß die filtrierte Salzlösung in einen Vorverdampfer mit nachgeschaltetem Eindikker übergeführt wird, in welchem die Kristallisation erfolgt, die Salze über eine Zentrifuge abgeschieden und nach dem Trocknen in einen Aluminiumschmelzofen eingesetzt werden und der Rückstand am Filter des Trennbehälters chloridfrei ( < 5% Cl) gewaschen und deponiert bzw. bei höheren Aluminiumoxidgehalt zum Wiedereinsatz in der Elektrolysezelle aufbereitet wird.

Die Aufbereitung der Schlacke in Stücke < 10 cm kann dabei entweder in einem Backenbrecher oder durch Ausgießen der Schlacke aus dem Umschmelzofen in dünne Platten gesehen, die dann mit geringem Aufwand zerkleinert werden können.

Zusätzlich kann der Staub aus der Abgasreinigungsanlage und Entstaubungsanlage in die drehbare Lösetrommel eingesetzt werden.

Als Lösewasser wird das Waschwasser des Rückstandes aus dem Trennbehälter verwendet.

Anstelle der Lösetrommel ist auch denkbar, die flüssigen Schlacken in einen tiefen Behälter mit Wasser zu kippen. Durch den Wegfall der mechanischen Aubereitung und Auflösung der wasserlöslichen Anteile durch den Wärmeinhalt der Schmelze kann zusätzlich Energie eingespart werden und die Schlacke wird gleichzeitig fein aufbereitet. Als Waschwasser für den Rückstand aus dem Trennbehälter wird das Kondensat vom Vorverdampfer und Eindicker verwendet.

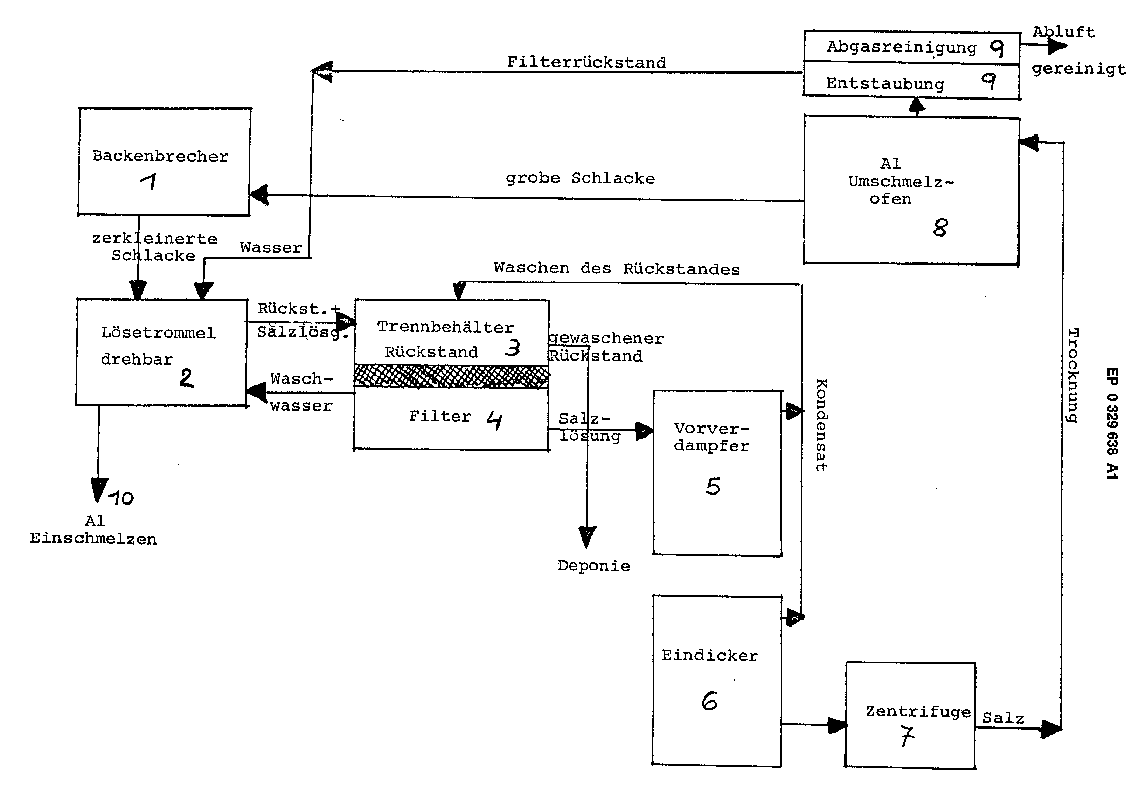

Das erfindungsgemäße Verfahren wird beispielsweise an dem beiliegenden Schema, das in der Zeichnung dargestellt ist, erklärt.

Die Anlage besteht aus einem Backenbrecher 1, einer drehbaren Lösetrommel 2, einem Trennbehälter 3 mit Filter 4, einem Vorverdampfer 5 mit nachgeschaltetem Eindicker 6, einer Zentrifuge 7, einem Aluminiumschmelzofen 8 mit Abgasreinigungs- und Entstaubungsanlage 9.

Die Salzschlacke wird im Backenbecher 1 in Stücke < 10 cm aufbereitet.

Die zerkleinerte Salzschlacke und der Staub aus der Abgasreinigung des Aluminiumschmelzofens gelangt in eine drehbare Lösetrommel 2. Die Schlacke wird darin aufgelöst und das metallische Aluminium abgetrennt und nach Trocknung eingeschmolzen. Als Lösewasser wird das Waschwasser des Rückstandes aus dem Trennbehälter 3 verwendet.

Danach werden die unlöslichen Rückstände samt Salzlösung in einen Trennbehälter 3 mit Filter 4 befördert. Der Rückstand wird am Filter des Trennbehälters chloridfrei ( < 5 % Cl) gewaschen und deponiert bzw. bei höherem Aluminiumgehalt zum Wiedereinsatz in eine Elektrolysezelle aufbereitet. Als Waschwasser dient das Kondensat aus Vorverdampfer 5 und Eindicker 6. Die filtrierte Salzlösung wird in den Vorverdampfer 5 übergeführt.

Die Kristallisation erfolgt auf zwei Stufen über den Vorverdampfer 5 und den Eindicker 6. Danach werden die Umschmelzsalze über eine Zentrifuge 7 abgeschieden und nach Trocknung in den Al-Umschmelzofen eingesetzt.

Dem Umschmelzofen ist eine Abgasreinigung und Entstaubungsanlage zugeordnet. Diese Filterrückstände werden der Lösetrommel 2 zugeführt.

Es handelt sich um ein umweltfreundliches Verfahren, wobei keine Schadstoffe nach außen gelangen und die Filterrückstände in der Anlage wieder entsorgt werden. Weiters fällt kein Abwasser an, da es wieder in den Prozeß zurückgeführt wird. Gleichzeitig handelt es sich um ein Verfahren, bei dem durch die Wiederverwendung, z.B. des Kondensates oder Waschwassers, Energie eingespart wird. Die zurückgewonnenen Umschmelzsalze werden wieder in den Prozeß eingesetzt.

**Patentansprüche**

1. Verfahren zur Aufbereitung und Entsorgung von Krätzen, Salzschlacken und aluminiumhaltigen Abfällen, die nach einem Zerkleinerungsvorgang Korngrößen < 10 cm aufweisen, dadurch gekennzeichnet, daß die Krätzen, Salzschlacken und aluminiumhaltigen Abfälle in einer drehbaren Lösetrommel (2) zur Auflösung und Abtrennung des metallischen Aluminiums mit Wasser behandelt und anschließend die unlöslichen Rückstände samt Salzlösung in einen Trennbehälter (3) mit Filter (4) befördert werden, während das abgetrennte, in der Lösetrommel (2) zurückbleibende metallische Aluminium nach Trocknung in den Schmelzofen (10) rückgeführt wird, daß die filtrierte Salzlösung in einen Vorverdampfer (5) mit nachgeschaltetem Eindicker (6) übergeführt wird, in welchem die Kristallisation erfolgt, die Salze über eine Zentrifuge (7) abgeschieden und nach dem Trocknen in einen Aluminiumschmelzofen (8) eingesetzt werden und der Rückstand am Filter (4) des Trennbehälters (3) chloridfrei (< 5% Cl) gewaschen und deponiert bzw. bei höheren Aluminiumoxidgehalt zum Wiedereinsatz in der Elektrolysezelle aufbereitet wird.

2. Verfahren nach Anspruch 1, dadurch gekennzeichnet, daß das im Vorverdampfer (5) und Eindicker (6) anfallende Kondensat als Waschwasser für den Rückstand im Trennbehälter (3) verwendet wird.

3. Verfahren nach Anspruch 1, dadurch gekennzeichnet, daß als Lösewasser in der Lösetrommel (2) das Waschwasser des Rückstandes aus dem Trennbehälter (3) verwendet wird.

4. Verfahren nach Anspruch 1, dadurch gekennzeichnet, daß der an der Entstaubungsanlage und Abgasanlage (9) des Aluminiumumschmelzofens (8) anfallende Staub gemeinsam mit der zerkleinerten Schlacke in der drehbaren Lösetrommel (2) aufbereitet wird.

Abluft gereinigt

Trocknung

Abgasreinigung 9

Entstaubung 9

Al Umschmelz- ofen 8

Zentrifuge Salz 7

Filterrückstand

grobe Schlacke

Waschen des Rückstandes

Kondensat

Vorver- dampfer 5

Eindicker 6

gewaschener Rückstand

Trennbehälter Rückstand 3

Filter 4

Salz- lösung

Deponie

Rückst. + Salzlösg.

Wasch- wasser

Backenbrecher 1

zerkleinerte Schlacke

Wasser

Lösetrommel drehbar 2

Al Einschmelzen 10

Europäisches
Patentamt

# EUROPÄISCHER RECHERCHENBERICHT

Nummer der Anmeldung

EP 89 89 0007

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 368 070 (P. FRACCHIA) * Insgesamt * --- | 1-4 | C 22 B 21/00 C 22 B 7/04 |
| X | US-A-4 073 644 (P.N. PAPAFINGOS) * Ansprüche * --- | 1-4 | |
| Y | EP-A-0 075 971 (METALLGESELLSCHAFT AG) * Ansprüche * --- | 1-4 | |
| Y | FR-A-2 406 466 (G. VON BORMANN) * Ansprüche * --- | 1-4 | |
| P,X | US-A-4 752 328 (R.D. PETERSON) * Ansprüche * --- | 1-4 | |
| A | DE-A-3 200 347 (KALI UND SALZ AG) --- | | |
| A | DE-A-1 533 104 (MAGNETFABRIK BONN GmbH) --- | | |
| A | US-A-3 770 424 (P.H. FLOYD) --- | | RECHERCHIERTE SACHGEBIETE (Int. Cl.4) |
| A | FR-A-2 410 507 (KNIPPI "NIPRORUDA") --- | | C 22 B |
| A | GB-A- 784 884 (MAXWORTH METAL PRODUCTS LTD) --- | | |
| A,D | EP-A-0 167 789 (AUSTRIA METALL AG) ----- | | |

Der vorliegende Recherchenbericht wurde für alle Patentansprüche erstellt

| Recherchenort | Abschlußdatum der Recherche | Prüfer |
|---|---|---|
| DEN HAAG | 27-04-1989 | JACOBS J.J.E.G. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes
   Dokument

EPO FORM 1503 03.82 (P0403)